# EUROPÄISCHE PATENTANMELDUNG

(11) **EP 1 428 611 A1**
(43) Veröffentlichungstag der Anmeldung: **16.06.2004**
(21) Anmeldenummer: 02102753.7
(22) Anmeldetag: 13.12.2002
(51) Int. Cl.: B23Q 1/00, B23Q 16/08

(54) **Spanneinrichtung zur Befestigung eines Einzugsbolzens mit Nuten**

(71) Anmelder: Mettchen, Jürgen, 56290 Beltheim (DE)
(72) Erfinder: Mettchen, Jürgen, 56290 Beltheim (DE)
(74) Vertreter: Szynka, Dirk, Dr.

(57) **Zusammenfassung**

Die Erfindung bezieht sich auf eine neuartige Spanneinrichtung (16) zur Befestigung eines Einzugsbolzens, bei der für die Verriegelung eines mit dem Einzugsbolzen anzubringenden Werkstücks Nuten (15) zur Aufnahme von Passsteinen Verwendung finden.

## Beschreibung

Die Erfindung betrifft eine Spanneinrichtung zur Befestigung eines Einzugsbolzens beispielsweise an einem Montagetisch einer Werkzeugmaschine, an einem Vermessungstisch und dergleichen. Solche Spanneinrichtungen, die häufig auch als Spanndosen bezeichnet werden, werden an einem solchen Tisch montiert, und dazu passende Einzugsbolzen werden an einer Halterung, an der ein zu vermessendes oder zu verarbeitendes Werkstück befestigt ist, oder auch an dem Werkstück selbst angebracht. Durch Einführen der Einzugsbolzen in Aufnahmeöffnungen der Spanneinrichtungen und Verklemmen der Einzugsbolzen in der Spanneinrichtung können die Werkstücke damit schnell und einfach sowie lösbar befestigt werden. Wesentliche Eigenschaften sind dabei insbesondere die Lagepräzision der Montage mit Hilfe der Einzugsbolzen und Spanneinrichtungen sowie die aufnehmbaren Kräfte.

Durch Verwendung einer Mehrzahl von Spanneinrichtungen können dabei insbesondere auch um eine durch den Einzugsbolzen verlaufende Drehachse wirkende Drehmomente aufgenommen werden. Hierzu weisen die fest zu spannenden Werkstücke oder Werkstückhalterungen eine entsprechend angebrachte Mehrzahl Einzugsbolzen auf.

Der Erfindung liegt das technische Problem zu Grunde, eine Spanneinrichtung des beschriebenen Typs mit verbesserten technischen Eigenschaften und ein daran angepasstes Herstellungsverfahren anzugeben.

Die Erfindung richtet sich zum einen auf eine Spanneinrichtung zur Befestigung eines Einzugsbolzens mit einer Aufnahmeöffnung zum Einführen des Einzugsbolzens in die Spanneinrichtung und einer die Aufnahmeöffnung umgebenden Anlageoberfläche, welche Spanneinrichtung dazu ausgelegt ist, einen mit dem Einzugsbolzen versehenen Gegenstand durch Einführen des Einzugsbolzens in die Aufnahmeöffnung und Verklemmen des Einzugsbolzens in der Aufnahmeöffnung zu befestigen, wobei der Gegenstand an der Anlageoberfläche anliegt und wobei die Spanneinrichtung dadurch gekennzeichnet ist, dass die Anlageoberfläche zumindest eine von der Aufnahmeöffnung beabstandete offene Nut aufweist, welche Nut dazu ausgelegt ist, einen an den Gegenstand angebrachten Vorsprung aufzunehmen und damit den an der Spanneinrichtung befestigten Gegenstand bezüglich einer Drehung gegenüber der Spanneinrichtung um eine durch den Einzugsbolzen verlaufende Achse zu verriegeln.

Ferner bezieht sich die Erfindung auf einen Satz aus einer solchen Spanneinrichtung und einem daran zu befestigenden Gegenstand mit dem Einzugsbolzen gemäß Anspruch 8 und auf ein Verfahren zur Herstellung eines solchen Gegenstandes, und zwar in Form einer Werkstückhalterung, gemäß Anspruch 12.

Bevorzugte Ausgestaltungen sind in den abhängigen Ansprüchen angegeben.

Die Grundidee der Erfindung besteht darin, zusätzlich zu der Befestigung des Gegenstandes durch den Einzugsbolzen eine weitere oder davon unabhängige eigentliche Positioniermöglichkeit bzw. eine zusätzliche Stabilität gegen zwischen dem Gegenstand und der Spanneinrichtung wirkenden Drehmomente zu erreichen. Dazu weisen der Gegenstand und die Spanneinrichtung einander zugeordnete Anlageoberflächen auf, wobei zumindest in der Anlageoberfläche der Spanneinrichtung, vorzugsweise auch in der des Gegenstandes, eine Nut vorgesehen ist. In einer der Nuten, vorzugsweise in der Nut des Gegenstandes, ist ein Nutenstein befestigt, also ein zum Formschluss mit der anderen Nut ausgelegter Körper, der beispielsweise aus einem Hartmetall oder einem Stahl bestehen kann. Der Nutenstein kann in der Nut beispielsweise angeschraubt sein, aber auch geklebt oder anderweitig befestigt sein. Der Nutenstein ist dazu ausgelegt, in die jeweils andere Nut, also vorzugsweise in die Nut an der Spanneinrichtung, einzugreifen und so durch Formschluss eine Verriegelung bezüglich einer Drehung um den Einzugsbolzen bzw. die Aufnahmeöffnung für den Einzugsbolzen zu bewirken. Auch ohne Nutenstein ist der Formschluss mit einem andersartigen Vorsprung an dem Gegenstand denkbar, jedoch weniger bevorzugt.

Je nach Anwendungsfall können dabei verschiedene Vorteile im Vordergrund stehen. Zum einen kann das Einführen des Nutensteins in die komplementäre Nut die Zentrierung bei der Befestigung erleichtern. Zum zweiten erlaubt die Erfindung die Befestigung unter Verwendung nur eines einzigen Einzugsbolzens, wobei gleichzeitig relativ hohe Drehmomente aufgenommen werden können. Zum Dritten kann die Erfindung dann, wenn der Einzugsbolzen in verschiedenen Winkelpositionen in der zugehörigen Aufnahmeöffnung befestigt werden kann (was die Regel ist) zur Festlegung einer oder auch einer Mehrzahl von Winkelpositionen zwischen Gegenstand und Spanneinrichtung dienen. Insbesondere können mehrere Nuten zur Aufnahme des Nutensteins in verschiedenen Drehpositionen vorgesehen sein, vorzugsweise in Winkeln, die ganzzahlige Bruchteile des Vollkreises bilden. Besonders bevorzugt sind dabei Winkelpositionen unter 90°, unter 45° oder insbesondere auch unter 15°. Bei einer Aufteilung des Vollkreises in 15°-Schritte lassen sich die meisten technisch wichtigen Winkel realisieren.

Es können natürlich auch mehr als ein Nutenstein vorgesehen sein, insbesondere um die Drehmomentfestigkeit zu verbessern.

Der Gegenstand kann selbst Werkstück oder aber auch eine Halterung für ein an ihm zu befestigendes Werkstück sein. Die Werkstückhalterung kann die Befestigung eines Werkstückes in konventioneller Weise ermöglichen, beispielsweise über schraubstockähnliche Klemmbacken.

Es lassen sich somit vor allem auch Bearbeitungsschritte an einem Werkstück vollziehen, die unter verschiedenen Positionen des Werkstücks vorgenommen werden sollen. Zwischen den Bearbeitungsschritten kann die Verbindung zwischen Werkstück bzw. Werkstückhalterung und Spanneinrichtung gelöst und in einer anderen Winkellage wieder angebracht werden. Zur Veranschaulichung wird auf das Ausführungsbeispiel verwiesen.

Die Nuten und der oder die Nutensteine haben vorzugsweise zumindest größtenteils senkrecht zu den entsprechenden Anlageoberflächen verlaufende Seitenwände, die zur Aufnahme der wirksamen Kräfte ausgelegt sind. Vorzugsweise sind dies in Bezug auf den Einzugsbolzen bzw. die Aufnahmeöffnung im wesentlichen radial liegende Seitenwände, die dementsprechend günstig für die Aufnahme von Drehmomenten um den Einzugsbolzen liegen. Die übrigen Seitenwände der Nuten können vorzugsweise gegenüber dem Nutenstein der Nuten Übermaß haben, da eine radiale Positionierung ohnehin durch den Einzugsbolzen erfolgt. Der Nutenstein wiederum ist vorzugsweise zwischen zwei solchen radial verlaufenden Seitenwänden gehalten und dadurch positioniert, und zwar sowohl bezüglich der Nut, in der er befestigt ist als auch bezüglich auch Nut, mit der er die Verriegelung bei der Befestigung des Gegenstandes an der Spanneinrichtung herstellt. Die entsprechenden Maße des Nutensteins und die Abstände der entsprechenden Nutseitenwände müssen also der Positioniergenauigkeit entsprechend angebracht sein.

Es sind insbesondere verschiedene Kombinationsmöglichkeiten von Einzugsbolzen und Aufnahmeöffnungen denkbar. Zum einen richtet sich die Erfindung auf Spanneinrichtungen, die mehr als eine Aufnahmeöffnung aufweisen, und zwar in voneinander abweichenden Richtungen, vorzugsweise unter 90° zueinander. Eine solche Spanneinrichtung kann also insgesamt beispielsweise eine Quaderform aufweisen und an zumindest zwei Seitenflächen des Quaders entsprechende Aufnahmeöffnungen für Einzugsbolzen enthalten. Alternativ oder zusätzlich kann die Spanneinrichtung auch neben zumindest einer Aufnahmeöffnung einen Einzugsbolzen aufweisen, der in eine andere Richtung gerichtet ist. Damit lässt sich eine solche Spanneinrichtung als Zwischenstück zwischen einer anderen Spanneinrichtung und einem zu befestigenden Gegenstand verwenden. Auch hier sind vorzugsweise Winkel von 90° zwischen Einzugsbolzen und Aufnahmeöffnung (derselben Spanneinrichtung) vorzusehen. Kombiniert mit den bereits erläuterten Möglichkeiten verschiedener Winkelpositionierungen um die jeweiligen Einzugsbolzen und Aufnahmeöffnungen ergeben sich damit mannigfaltige Möglichkeiten für diskret definierte Lagepositionierungen eines Werkstücks bei der Bearbeitung, die durch die Verwendung der soeben beschriebenen Zwischenstücke bzw. Adapter kombiniert werden können. Etwa kann ein Werkstück oder eine Werkstückhalterung nacheinander an verschiedenen Aufnahmeöffnungen an ein und derselben Spanneinrichtung befestigt werden oder durch Drehen eines Zwischenstücks und zusätzliches Drehen gegenüber dem Zwischenstück um Winkel in mehr als einer Ebene verdreht werden. In den verschiedenen Positionen sind dann an den jeweils optimal zugänglichen Seiten des Werkstückes Bearbeitungsschritte auszuführen.

Schließlich kann sich ein Benutzer der Spanneinrichtung eine entsprechende Werkzeughalterung ohne weiteres selbst anfertigen. Dabei stellt sich häufig das Problem einer Temper-Härtung der Werkzeughalterung. Die Passsteine können dabei in Nuten in der Werkstückhalterung montiert (z. B. festgeschraubt) werden, wobei sich zwischen diesen Nuten der Werkstückhalterung und den Passsteinen wiederum eine entsprechende Passung ergeben soll. Diese Nuten lassen sich vorzugsweise vor einer Temper-Härtung einfräsen und nach der Temper-Härtung nacharbeiten. Bei der Nachbearbeitung kann dabei eine hohe Genauigkeit erreicht werden. Diese Nachbearbeitung ist, weil nur geringe Materialmengen abgetragen werden müssen, trotz der erheblichen Härte des Materials in jeder Werkstatt durchführbar, die über eine entsprechend genaue Vorrichtung verfügt. Dabei kann beispielsweise auch der Anwender selbst die für ihn erforderliche Genauigkeit der Positionen der Seitenflächen der Nuten sicherstellen. Im übrigen werden die unvermeidlichen Materialänderungen während des Temper-Schritts durch die Nachbearbeitung unproblematisch. Insbesondere kann ein Gewinde zum Festschrauben des entsprechenden Passsteins ausreichend Spiel haben, um von den Materialänderungen während des Temper-Schritts unbeeinträchtigt zu bleiben. Durch die Verwendung der im wesentlichen radial in Bezug auf den Einzugsbolzen verlaufenden Seitenflächen zur Passung treten im übrigen die während des Temperschritts auftretenden relativen Maßänderungen nur in Bezug auf den Zwischenabstand zwischen diesen Seitenflächen auf (wenn eine homogene Materialänderung vorausgesetzt wird). Für die Nachbearbeitung der Nuten sind im Regelfall einfachere Werkstückmaschinen ausreichend und keine CNC-Maschinen erforderlich.

Insgesamt ist die erfindungsgemäße Ergänzung der Befestigung über den Einzugsbolzen und die Aufnahmeöffnung der Spanneinrichtung sehr einfach in Herstellung und Handhabung und zur Aufnahme hoher Drehmomente bei gleichzeitig präziser Positionierung geeignet.

Die Erfindung richtet sich zudem auf eine solche Spanneinrichtung zur Befestigung eines Einzugsbolzens mit einem Satz in der Spanneinrichtung in einem Rollelementhalter gehaltenen Rollelementen, die in einen Außenbereich der Aufnahmeöffnung nach innen gedrückt werden können, um eine auf die Einführrichtung des Einzugsbolzens bezogen seitliche Außenfläche des Einzugsbolzens an einem Hinterschnitt der Außenfläche zu greifen und damit den Einzugsbolzen in der Aufnahmeöffnung zu verklemmen, wobei die Rollelemente durch eine bezogen auf die Einführrichtung seitliche Öffnung eines die Aufnahmeöffnung seitlich umgebenden Spanneinrichtungsteils in den Rollelementhalter eingeführt sind, sowie auf ein entsprechendes Herstellungsverfahren, bei dem die Rollelemente durch die seitliche Öffnung eingeführt werden.

Mit dem Begriff "Rollelemente" sind dabei insbesondere die konventionellen Kugeln gemeint, jedoch kann es sich auch um andere Elemente handeln, die einen senkrecht zu der Einführrichtung des Spannbolzens wirkenden Rollradius aufweisen, beispielsweise um zylindrische Rollen, Ellipsoide usw.

Dieser Aspekt der Erfindung besteht somit darin, bei einer erfindungsgemäßen Spanneinrichtung die Rollelemente durch eine seitliche Öffnung in den Rollelementhalter einzuführen, von dem sie gehalten werden sollen. Konventionellerweise war eine solche Einführöffnung für die Rollelemente nicht vorhanden. Stattdessen wurde der Rollelementhalter mit den Kugeln durch die Aufnahmeöffnung für den Einzugsbolzen eingebracht und montiert. Der wesentliche Vorteil liegt darin, dass bei der Bemessung des Rollelementhalters und der Rollelemente im Verhältnis zu der Aufnahmeöffnung für den Einzugsbolzen nun nicht mehr auf das gemeinsame Einschieben des Rollelementhalters und der Rollelemente durch dieselbe Öffnung, durch die auch der Einzugsbolzen eingeführt werden soll, Rücksicht genommen werden muss. Da die Spanneinrichtung so konstruiert sein muss, dass die Rollelemente, wenn in der Aufnahmeöffnung kein Einzugsbolzen eingesetzt ist, nicht aus dem Rollelementhalter in die Öffnung fallen, können die Wandstärken des Rollelementhalters im Verhältnis zu dem Abrollradius der Rollelemente nicht beliebig gering sein. Konventionellerweise sind die Wandstärken nur wenig kleiner als der doppelte Abrollradius.

Ferner kann die Einführung der Rollelemente durch die zugehörige Einführöffnung, die auch mehrfach vorgesehen sein kann, einfacher und kontrollierter erfolgen als zusammen mit dem Rollelementhalter. Im konventionellen Fall müssen die Rollelemente nämlich einzeln in den Rollelementhalter gelegt werden, wobei nach dem Einlegen jeweils noch gebördelt werden muss, damit kein Rollelement mehr aus dem Käfig herausfallen kann. Demgegenüber können bei der Erfindung die Rollelemente auch nacheinander eines um das andere eingesetzt werden.

Die Erfindung erlaubt somit die Verwendung besonders dünnwandiger Rollelementhalter, die vorzugsweise sogar dünner als der Abrollradius selbst sein können.

Aus der Verwendung dünnwandiger Rollelementhalter folgt wiederum ein relativ großer Überstand der Rollelemente über den Rollelementhalter nach außen und/oder nach innen in die Aufnahmeöffnung. Bei der Wechselwirkung der Rollelemente mit den diese einwärts drückenden Teilen der Spanneinrichtung und/oder bei der Wechselwirkung der Rollelemente mit dem Hinterschnitt der Außenmantelfläche des Einzugsbolzens kommen damit relativ große Linienberührungen und damit günstigere Kraftübertragungsverhältnisse zu Stande. Damit lassen sich mit relativ kleinen Spanneinrichtungen im Vergleich zum Stand der Technik größere Einzugskräfte realisieren.

Vorzugsweise ist der Rollelementhalter in der Aufnahmeöffnung durch ein elastisches Element beaufschlagt, das ihn und mit ihm die Rollelemente im Vergleich zu einer Position, in der die Rollelemente durch die Einführöffnung in den Rollelementhalter eingebracht werden können, so verschiebt, dass diese nicht mehr durch die Einführöffnung zurückrollen können. Vorzugsweise beaufschlagt das elastische Element den Rollelementhalter gegen die Einführrichtung des Einzugsbolzens, d.h. in der üblichen Orientierung solcher Spanneinrichtungen in zeichnerischen Darstellungen, nach oben. Das elastische Element ist vorzugsweise eine Metallfeder, die für diese Funktion zum Einen einen im Vergleich zu konventionellen Elastomer-O-Ringen größeren elastischen Hub zur Verfügung stellt und zum Zweiten keine Ermüdungsprobleme zeigt. Die bevorzugte Wahl ist eine Metalltellerfeder.

Im übrigen kann die erfindungsgemäße Spanneinrichtung konventionell aufgebaut sein, also insbesondere einen Zylinder und einen darin verschieblich gehaltenen Zylinderbolzen aufweisen. Die Verschieberichtung des Zylinderkolbens liegt dabei parallel zu der Einführrichtung des Einzugsbolzens, also in der Einführrichtung und gegen die Einführrichtung. Der Zylinderkolben wird konventionellerweise in der Einführrichtung durch Federn beaufschlagt, die ihn an einem mit dem Zylinder fest verbundenen Deckel oder einem anderen relativ zu dem Zylinder festen Teil abstützen. In der umgekehrten Richtung kann der Zylinderkolben durch ein Druckfluid beaufschlagt werden, insbesondere durch eine Hydraulikflüssigkeit in einer entsprechend versorgten Druckkammer. Im Prinzip sind hier natürlich auch Varianten denkbar, etwa eine Vertauschung oder alternative Antriebe. Die dargestellte Lösung ist jedoch üblich und auch im Rahmen dieser Erfindung bevorzugt. Die hier bereits mehrfach erwähnte Aufnahmeöffnung besteht in der Regel in einer zylinderförmigen Bohrung in dem Zylinderkolben, in die der Rollelementhalter und dann die Rollelemente eingesetzt werden. Zur Verdeutlichung wird auf das Ausführungsbeispiel verwiesen.

Es wird ausdrücklich darauf hingewiesen, dass eine zylinderförmige Geometrie im Sinne eines kreisförmigen Querschnitts bei der Erfindung jedoch nicht notwendig ist. Mit dem Begriff "Zylinder" und "Zylinderkolben" sind hier die üblicherweise so bezeichneten hydraulischen oder pneumatischen Funktionselemente gemeint, die auch andere als kreisförmige Querschnittsformen zeigen können. Der Begriff "Zylinderkolben" umfasst also beispielsweise auch über ein Druckfluid bewegbare Bauelemente mit eckigem oder elliptischem Querschnitt.

Es wurde bereits erwähnt, dass die Einführöffnung für die Rollelemente auch mehrfach vorgesehen sein kann. Bevorzugt ist allerdings, dass die Zahl der Einführöffnungen kleiner ist als die Zahl der Rollelemente, also eine Mehrzahl Rollelemente durch dieselbe Einführöffnung eingebracht werden. Insbesondere ist bevorzugt, dass es genau eine Einführöffnung für Rollelemente gibt. Dann können die Rollelemente beispielsweise dadurch über den Umfang des Rollelementhalters verteilt werden, dass diese jedenfalls beim Einführen der Rollelemente um eine der Einführrichtung des Einzugsbolzens entsprechende Drehachse drehbar ist. Nach Einführen eines Rollelements durch die Einführöffnung in die entsprechende Position in dem Rollelementhalter wird diese also um eine Einheit weiter verdreht, so dass das nächste Rollelement in die nächste Position eingebracht werden kann.

Im übrigen kann die Einführöffnung dann verschlossen werden, ist also im fertigen Zustand der Spanneinrichtung nicht mehr offen. Dies ist im Rahmen dieser Erfindung zum einen bevorzugt, um eine zusätzliche Sicherheit gegen unbeabsichtigtes Eindringen eines Rollelements in die Einführöffnung zu schaffen. Zum anderen ist es vor allem erwünscht, ein Hindurchströmen von beispielsweise Kühlschmiermittel in einer spanabhebenden Bearbeitungsmaschine durch diese Einführöffnung zu verhindern.

Bei einer weiteren bevorzugten Ausgestaltung der Erfindung ist die Spanneinrichtung für einen Einzugsbolzen ausgelegt, der einen konischen Basisabschnitt seines Mantels aufweist, also einen konischen proximalen Abschnitt. Dabei bedeutet "proximal", dass dieser Abschnitt der Seite, an der der Einzugsbolzen an dem Werkstück oder der Werkstückhalterung befestigt ist, benachbart ist und in der Aufnahmeöffnung der Spanneinrichtung im äußeren Bereich liegt. Dementsprechend ist die Aufnahmeöffnung mit einer konischen Fläche in ihrem (im Sinne der üblichen zeichnerischen Darstellung) oberen Endbereich ausgestattet, die zu der konischen Mantelfläche des Einzugsbolzens komplementär ist. In dem festgeklemmten Zustand des Einzugsbolzens liegen dabei die konischen Flächen aneinander. Beim Einführen selbst halten sie jedoch infolge der Konizität einen Abstand, so dass das Einführen mit Spiel und daher leicht erfolgen kann. Die komplementären konischen Flächen justieren den Einzugsbolzen gewissermaßen selbsttätig in die richtige Position.

Vorzugsweise ist die Spanneinrichtung mit dem Einzugsbolzen dabei so ausgelegt, dass sich im festgeklemmten Zustand des Einzugsbolzens eine Spielpassung zwischen den konischen Flächen ergibt, diese also ein geringes Spiel oder praktisch kein Spiel zueinander haben, jedoch nicht infolge der Klemmkräfte der Spanneinrichtung in einem erheblichen Kraftschluss miteinander stehen. Dadurch können Verluste der Spannkräfte an dieser Stelle und Verspannungen in der Spanneinrichtung, die zu Positionsungenauigkeiten führen können, vermieden werden.

Ferner ist bevorzugt, dass das im Sinne der zeichnerischen Darstellung untere Ende des Einzugsbolzens, also das in der Einführrichtung vordere Ende, auch im festgeklemmten Zustand des Einzugsbolzens von der gegenüberliegenden Fläche der Spanneinrichtung einen gewissen Abstand hält. Diese gegenüberliegende Fläche ist vorzugsweise eine Bodenplatte des Rollelementhalters (der im übrigen rohrförmig ist), kann aber auch eine Bodenplatte des beschriebenen Zylinderkolbens sein. Durch diesen Abstand wird die Position des Einzugsbolzens durch versehentlich in die Aufnahmeöffnung gefallene Partikel wie Bohrspäne o. Ä. nicht tangiert, solange diese Partikel nicht zu zahlreich oder zu groß sind. Dies ist ein erheblicher Vorteil, da anderenfalls, also bei Anlage zwischen dem Einzugsbolzen und der gegenüberliegenden Fläche, peinlichst auf Sauberkeit der Flächen geachtet werden muss.

Zum Zweiten kann dieser Abstand, wie das Ausführungsbeispiel verdeutlicht, auch dafür sorgen, dass der Einzugsbolzen entgegen den üblichen Lösungen im Stand der Technik beim Lösen der Klemmung nicht angehoben wird, also auch beim Einführen in die Aufnahmeöffnung vor dem Klemmen bereits ganz abgesenkt und nicht angehoben ist. Demzufolge machen sich beim Auflegen des Werkstücks und Einführen des oder der Einzugsbolzen in die Aufnahmeöffnung(en) Verunreinigungen (etwa die erwähnten Bohrspäne) zwischen der Anlageoberfläche der Spanneinrichtung und der damit in Anlage zu bringenden Anlageoberfläche der Werkstückhalterung oder des Werkstücks unmittelbar durch ein "Wackeln" bemerkbar. Wenn jedoch, wie im Stand der Technik, hier ein gewisser Abstand zwischen den beiden Oberflächen besteht, so wirken sich diese Verunreinigungen möglicherweise erst bei der Herstellung der Verklemmung aus und führen dann zu Lageungenauigkeiten. Der Abstand zwischen dem erwähnten vorderen Ende des Einzugsbolzens und der gegenüberliegenden Fläche kann beispielsweise einige wenige mm betragen.

Im Folgenden wird die Erfindung anhand einiger Ausführungsbeispiele in weiteren Einzelheiten erläutert, wobei die dargestellten Merkmale auch in anderen Kombinationen oder einzeln erfindungswesentlich sein können. Insbesondere wird darauf hingewiesen, dass sowohl in der vorstehenden als auch in der nachfolgenden Beschreibung nicht ausdrücklich zwischen Vorrichtungs- und Verfahrensmerkmalen unterschieden wird, sondern alle Merkmale in beiderlei Hinsicht zu verstehen sind.

Im Einzelnen zeigt:
- Fig. 1: eine Schnittansicht durch eine erfindungsgemäße Spanneinrichtung mit eingesetztem Einzugsbolzen in Klemmposition,
- Fig. 2: eine Fig. 1 entsprechende Schnittansicht, jedoch in Freigabeposition,
- Fig. 3: eine perspektivische Ansicht der Spanneinrichtung und des Einzugsbolzens aus den Fig. 1 und 2, wobei jedoch die Einzelteile getrennt und übereinander angeordnet dargestellt sind,
- Fig. 4: eine perspektivische Ansicht entsprechend Fig. 3 in zusammengebautem Zustand,
- Fig. 5: eine perspektivische Ansicht einer Werkstückhalterung mit einem Einzugsbolzen zur Befestigung in der Spanneinrichtung gemäß den Fig. 1 - 4,
- Fig. 6: eine perspektivische Ansicht der Spanneinrichtung aus den Fig. 1 - 4 und der Werkstückhalterung aus Fig. 5 in gekoppeltem Zustand,
- Fig. 7: eine Fig. 6 entsprechende Ansicht, jedoch mit einer Variante der Werkstückhalterung,
- Fig. 8: eine perspektivische Darstellung der Spanneinrichtung aus den Fig. 1 - 4 mit einer weiteren dritten Variante einer Werkstückhalterung, die eine eigene weitere Spanneinrichtung zur Befestigung eines Werkstücks enthält, wobei die Spanneinrichtung aus den Fig. 1 - 4, die Werkstückhalterung und das Werkstück getrennt voneinander dargestellt sind, und
- Fig. 9: eine Fig. 8 entsprechende Darstellung, wobei jedoch die Spanneinrichtung nach den Fig. 1 - 4, die Werkstückhalterung und das Werkstück in gekoppeltem Zustand dargestellt sind.

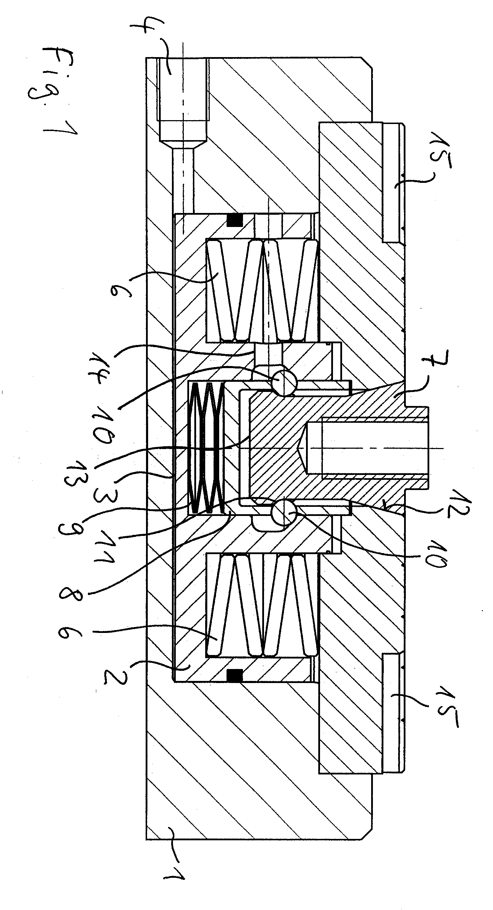

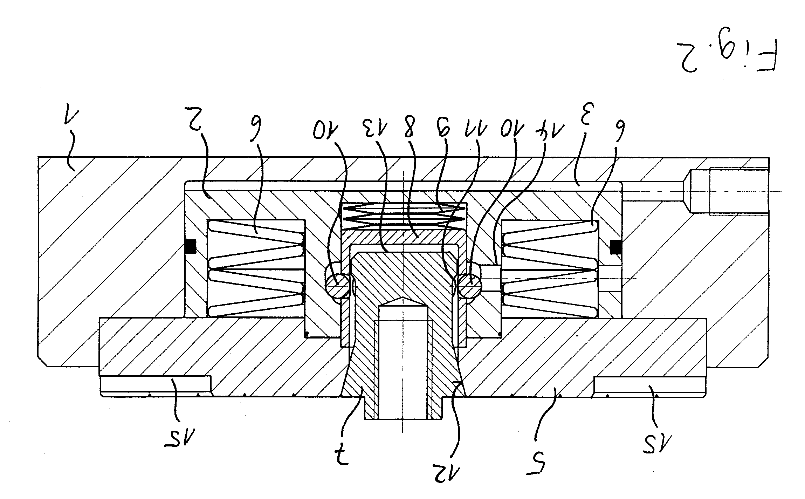

Die Fig. 1 und 2 zeigen einen als Basis der Spanneinrichtung dienenden und mit 1 bezifferten Zylinder. Darin ist in einer zylindrischen Bohrung mit bezogen auf die Figuren vertikaler Achse ein Zylinderkolben 2 vertikal verschieblich gelagert. Der Zylinderkolben 2 ist in Fig. 1 in einer unteren Endposition dargestellt, die einer Klemmung des Einzugsbolzens entspricht, und in Fig. 2 in einer oberen Endposition, die einer Freigabe entspricht. Die zylindrische Bohrung in dem Zylinder 1 bildet unter dem Zylinderkolben 2 eine in Fig. 2 mit 3 bezeichnete Hydraulikkammer, die von einer links eingezeichneten Hydraulikleitung 4 mit Hydrauliköl versorgt wird.

Eine obere Öffnung des Zylinders 1 ist fest von einem Deckel 5 verschlossen, dessen Oberseite die Anlageoberfläche der Spanneinrichtung bildet. Der Deckel 5 weist mittig eine konische Bohrung auf, die in eine zylindrische Bohrung in dem Zylinderkolben 2 übergeht, wobei die konische Bohrung, die zylindrische Bohrung, der Zylinderkolben 2 und der Zylinder 1 konzentrisch sind.

Der Zylinderkolben 2 enthält ebenfalls konzentrisch zu den erwähnten Elementen eine Ringausdrehung, die Stahltellerfederpakete 6 enthält. Die Stahltellerfederpakete 6 stützen sich an einem Kolbenboden des Zylinderkolbens 2 und an dem Deckel 5 ab und beaufschlagen den Zylinderkolben 2 vertikal nach unten und damit in der Einführrichtung eines im folgenden noch näher beschriebenen Einzugsbolzen 7. Dieser Einzugsbolzen 7 ist in beiden Figuren in der konischen Bohrung in dem Deckel 5 und in der zylindrischen Bohrung in dem Zylinderkolben 2 aufgenommen, die also gemeinsam durch den Einzugsbolzen ausgefüllte und daher nicht bezifferte Aufnahmeöffnungen für den Einzugsbolzen bilden.

Ferner befindet sich in der Aufnahmeöffnung, und zwar in der zylindrischen Bohrung in dem Zylinderkolben 2, ein Kugelhalter 8, der im Wesentlichen rohrförmig mit einer unten liegenden Bodenplatte ist. Zwischen der unteren Bodenplatte des rohrförmigen Kugelhalters 8 und dem bereits erwähnten Kolbenboden des Zylinderkolbens 2 befindet sich ein weiteres Stahltellerfederpaket 9, die den Kugelhalter 8 nach oben, also entgegen der Einführrichtung, beaufschlagt. Der Kugelhalter 8 enthält in seinem Rohrabschnitt seitliche Öffnungen, die jeweils eine Kugel 10 enthalten. Dabei sind die Öffnungen in dem Kugelhalter 8 innen etwas kleiner bemessen als der Durchmesser der Kugeln 10, so dass diese nicht durch die Öffnungen nach innen hindurch wandern können. Die Kugeln 10 ragen somit nach außen über den Kugelhalter 8 hinaus und treten in Wechselwirkung mit einer Ausfräsung an der Innenmantelfläche der bereits erwähnten zylindrischen Bohrung in dem Zylinderkolben 2, die Teil der Aufnahmeöffnung ist. Diese Ausdrehung ist an ihrem in den Figuren oberen Ende im Wesentlichen konisch gestaltet und zwingt daher die Kugeln in diesem Bereich durch den Kugelhalter 8 radial nach innen. Diese Situation ist in Fig. 1 dargestellt. Andererseits können die Kugeln 10 in einer tieferen Lage radial nach außen zurückweichen, was in Fig. 2 dargestellt ist. Entscheidend hierfür ist die Relativlage zwischen dem Kugelhalter 8 und dem Zylinderkolben 2, die infolge der Beaufschlagung durch die Tellerfederpakete 9 und eine Abstützung der Oberseite des Kugelhalters 8 an dem Deckel 5 letztlich durch die Position des Zylinderkolbens 2 in dem Zylinder 1 bestimmt wird. Wenn der Zylinderkolben 2 gemäß Fig. 1 in seiner unteren Endposition ist, sind die Kugeln 10 zwangsweise nach innen verrückt, während sie in der in Fig. 2 dargestellten oberen Endposition des Zylinderkolbens 2 nach außen ausweichen können.

Der Einzugsbolzen 7 zeigt einen hieran angepassten Hinterschnitt 11 an seinen Außenmantelflächen bzw. in anderen Worten eine Durchmesserverdickung an seinem in den Figuren unteren Ende. Die Kugeln verriegeln den Einzugsbolzen 7 in der Aufnahmeöffnung durch eine formschlüssige und kraftschlüssige Anpressung an diesen Hinterschnitt 11.

Dabei liegt eine konische Außenmantelfläche 12 in dem in den Figuren oberen Bereich des Einzugsbolzens 7 in Anlage an der entsprechend geformten konischen Innenfläche der bereits erwähnten Bohrung in dem Deckel 5. Diese Anlage ist auf Spielpassung ausgelegt, kann also ein sehr geringes Spiel haben bzw. sollte nur mit einem geringen Spiel oder optimalerweise ohne Kraftschluss erfolgen. Der Kraftschluss erfolgt vielmehr über die nicht gezeichnete Anlage zwischen der Oberseite des Deckels 5 und einem an dem Einzugsbolzen 7 montierten Gegenstand. Dadurch können Verspannungen des Deckels 5 und des Einzugsbolzens 7 in seinem oberen Bereich sowie Verluste der Einzugskraft vermieden werden. Im übrigen liegt der Einzugsbolzen 7 in der gelösten Position gemäß Fig. 2 genau so tief wie in der verklemmten Position gemäß Fig. 1, so dass sich bereits beim Aufsetzen einer Halterung oder eines Werkstücks mit dem Einzugsbolzen 7 auf der Oberfläche des Deckels 5 bemerkbar macht, wenn auf der Oberfläche des Deckels 5 oder an der Halterung oder dem Werkstück Partikel vorhanden sind, die einer genauen Positionierung im Wege stehen.

Die in den Figuren dargestellte Innenbohrung des Einzugsbolzens 7 ist eine konventionelle Gewindebohrung und dient zur Befestigung des Einzugsbolzens 7 in der Halterung oder dem Werkstück.

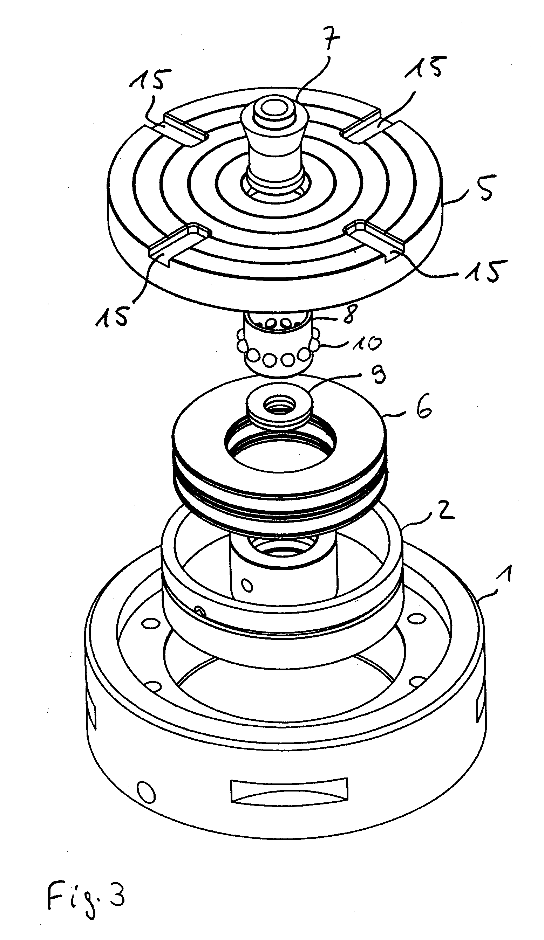

Bei der Montage der Spanneinrichtung können, wie Fig. 3 veranschaulicht, die Teile nacheinander ineinander gesetzt werden, wobei vor dem Einsetzen der Tellerfederpakete 6 in den Zylinderkolben 2 und nach einem Einsetzen des leeren Kugelhalters 8 in die Aufnahmeöffnung in dem Zylinderkolben 2 die Kugeln 10 durch eine in den Figuren mit 14 bezifferte seitliche Einführöffnung eingeführt werden. Dazu muss der Kugelhalter 8 gegen die Kraft der Tellerfederpakete 9 nach unten in die tiefst mögliche Position in dem Zylinderkolben 2 gepresst werden. Dann liegen die Öffnungen in dem Kugelhalter 8 auf dem Niveau der Einführöffnung 14 und können die Kugeln 10 nacheinander aufnehmen. Dazwischen wird der Kugelhalter 8 um die Zylindersymmetrieachse verdreht, um nacheinander alle Öffnungen zu der Winkelposition der Einführöffnung 14 zu bringen. Nach dem Einführen der letzten Kugel 10 kann man die Tellerfederpakete 9 den Kugelhalter 8 nach oben drücken lassen, so dass die Kugeln 10 nicht mehr herausfallen können. Danach können dann die Tellerfederpakete 6 und der Deckel 5 montiert werden.

In Fig. 3 ist zu beachten, dass der Kugelhalter 8 zur Veranschaulichung seiner Funktion mit eingesetzten Kugeln 10 gezeichnet ist, wenngleich er nicht mit diesen Kugeln zusammen eingeschoben wird.

Man erkennt, dass sich dank der erfindungsgemäßen Konstruktion im Vergleich zu dem Radius der Kugeln 10 dünnwandige Kugelhalter 8 verwenden lassen, die im vorliegenden Fall eine Wandstärke von nur etwa ¾ des Kugelradius aufweisen. Der Kugelradius kann beispielsweise 5 mm betragen. Andererseits erkennt man, dass die Öffnungen in dem Kugelhalter 8 ein nach innen Durchrutschen der Kugeln 10 verhindern, der Kugelhalter 8 also nicht mit den bereits eingesetzten Kugeln 10 in die Aufnahmeöffnung eingeschoben werden könnte.

Insgesamt bietet die Spanneinrichtung damit den Vorteil eines wesentlich verbesserten Kraftschlusses zwischen den Kugeln 10 und den zugeordneten Anlageflächen an der Ausdrehung in der Innenmantelfläche der Aufnahmeöffnung in dem Zylinderkolben 2 sowie mit dem Hinterschnitt 11 an dem Einzugsbolzen 7. Dies führt bei der dargestellten Spanneinrichtung beispielsweise zu einer trotz der kompakten Bauweise erheblichen Einzugskraft von 33 kN. Das ist bei einer Spanneinrichtung dieser Größe (Durchmesser des Deckels 5 etwa 125 mm) im Vergleich zum Stand der Technik eine Verdreifachung.

Die Figuren 1 - 3 zeigen im übrigen bereits, dass die Oberfläche der Spanneinrichtung vier unter 90° zueinander liegende Nuten 15 aufweist, die die bereits zuvor beschriebene Funktion erfüllen. Sie erlauben eine Drehung des Werkstücks oder des Werkstückhalters im Winkel von 90°, 180° sowie 270°. Allerdings lassen sich natürlich auch Werkstücke oder Werkstückhalter festspannen, die die Nuten 15 nicht nutzen, also nicht entsprechende Vorsprünge oder Passsteine aufweisen.

Die Passsteine können beispielsweise an dem Werkstück oder Werkstückhalter in dort präzise angebrachten Nuten angeschraubte Hartmetallklötze sein. Die Passung in den Nuten 15 erfolgt mit den jeweiligen Seitenflächen der Nuten 15, also im Sinn einer Drehung um diese Achse.

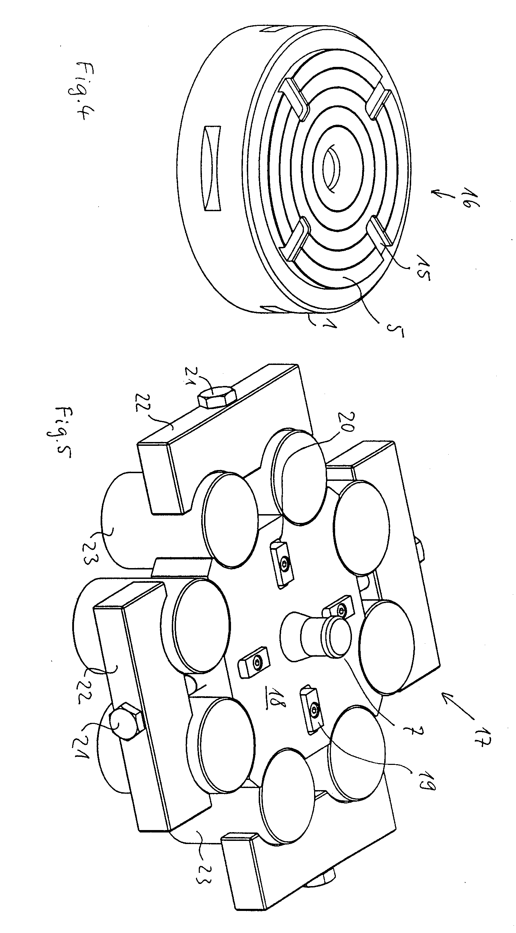

Fig. 4 zeigt noch einmal die Spanneinrichtung aus Fig. 3 in zusammengebautem Zustand und ohne Einzugsbolzen 7. In dieser und den folgenden Figuren wird die Spanneinrichtung zur Veranschaulichung mit der eigenen Bezugsziffer 16 bezeichnet.

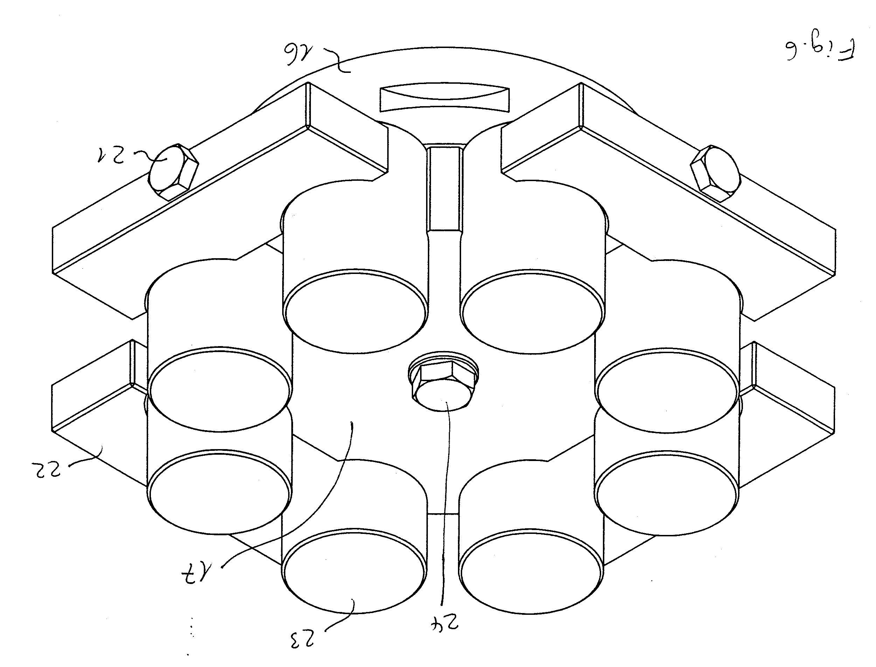

Fig. 5 zeigt eine zugehörige Werkstückhalterung 17, die den zu der Spanneinrichtung 16 passenden Einzugsbolzen 7 aufweist. Dieser ragt aus einer Anlageoberfläche 18 der Werkstückhalterung 17 heraus, die ferner komplementär zu den bereits erwähnten Nuten 15 in der Anlageoberfläche der Spanneinrichtung 16 angebrachte Passsteine 19 enthält. Diese Passsteine 19 sind über Zylinderschrauben in die Werkstückhalterung 17 eingeschraubt und sitzen dabei in Nuten 20 der Werkstückhalterung 17. Die Nuten 20 entsprechen in ihrer Position den Nuten 15 und sind in der bereits zuvor erläuterten Weise hinsichtlich der in Bezug auf den Einzugsbolzen 7 radialen Seitenkanten, also der Längeren der Seitenkanten, positionsgenau nachgearbeitet. Zuvor wurde die Werkstückhalterung 17 einem Temperschritt unterworfen, um eine Härtung zu erreichen. Die dazu senkrechten Seitenkanten, die eher in Umfangsrichtung in Bezug auf den Einzugsbolzen 7 liegen, haben gegenüber den Passsteinen 19 Spiel. Ferner hat das jeweilige Gewinde der Werkstückhalterung 17 für die zur Befestigung der Passsteine 19 dienenden Zylinderschrauben gegenüber diesen Zylinderschrauben Spiel. Für die Position der Passsteine 19 sind also auf die Umfangsrichtung bezogen nur die radialen Seitenwände der Nuten 20 verantwortlich.

Die Werkstückhalterung 17 trägt an ihren Außenseiten über Schrauben 21 spannbare Spannpratzen 22, die gegenüber dem mittleren Bereich der Werkstückhalterung 17 hier als einfache Zylinderblöcke dargestellte Werkstücke 23 festspannen können. Die einerseits in dem mittleren Bereich der Werkstückhalterung 17 und andererseits in den Spannpratzen 22 angebrachten und auf die Werkstücke 23 angepassten Ausfräsungen bestimmen die Positionierung der Werkstücke 23 in Bezug auf die durch die Passsteine 19 und die Nuten 15 vorgegebene Referenz. Auch bei diesen Ausfräsungen muss also mit der für die Bearbeitung der Werkstücke 23 geforderten Präzision gearbeitet werden. Es gelten hier sinngemäß die Ausführungen zur Nachbearbeitung der Nuten 20 nach der Temperung.

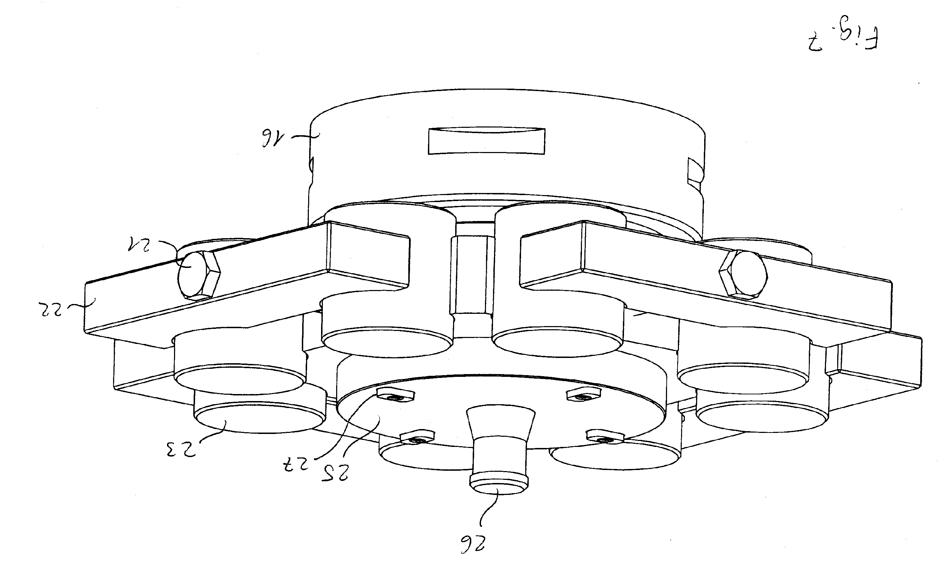

Wenn man die Werkstückhalterung 17 mit den Werkstücken 23 aus Fig. 5 umgekehrt auf die Spanneinrichtung 16 aus Fig. 4 aufsetzt und dort entsprechend den Erläuterungen zu den Fig. 1 - 3 festspannt, ergibt sich durch die Passung zwischen den Nuten 15, den Passsteinen 19 und den Nuten 20 eine präzise Lagepositionierung der Werkstücke 23 gegenüber der Spanneinrichtung 16. Dieser gekoppelte Zustand ist in Fig. 6 dargestellt. Die in der Mitte der Werkstückhalterung 17 dargestellte Schraube 24 hält den Einzugsbolzen 7, der in Fig. 5 zu sehen ist.

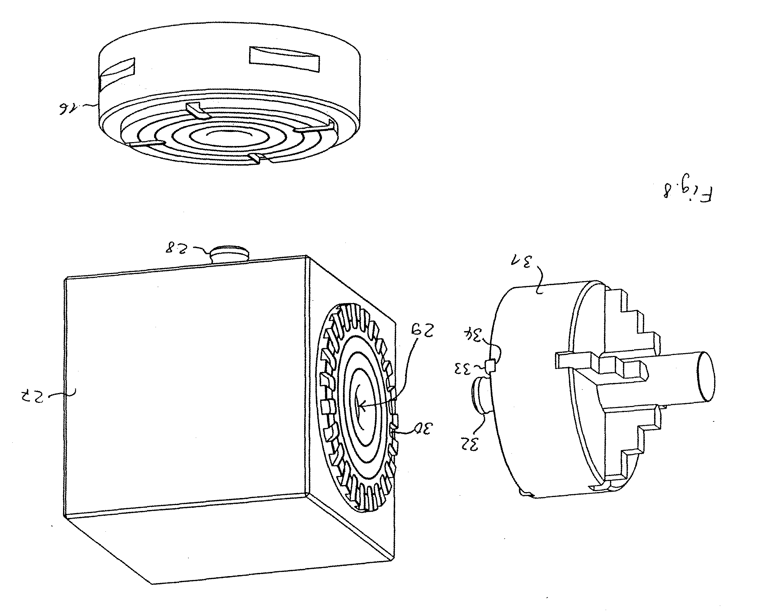

Fig. 7 zeigt eine Variante zu Fig. 6. Der Unterschied besteht darin, dass die Werkstückhalterung 25 in Fig. 7 einen weiteren Einzugsbolzen 26 und weitere Passsteine 27 in in Fig. 7 nicht im Einzelnen erkennbaren, aber den Nuten 20 entsprechenden weiteren Nuten aufweist. Die Werkstückhalterung 25 aus Fig. 7 ist also an beiden Seiten, der in Fig. 5 sichtbaren Seite sowie der in Fig. 6 sichtbaren Seite, mit den Merkmalen gemäß Fig. 5 ausgestattet. Diese erlauben es, die Werkstückhalterung 25 nach der Bearbeitung der Werkstücke 23 einfach umzudrehen und in dieser umgedrehten Position festzuspannen. Die Werkstücke können also von beiden Seiten, im Sinne der Figuren von oben und von unten, bearbeitet werden.

Außerdem können die Werkstücke 23 natürlich durch Drehen der Werkstückhalterung 25 oder auch der Werkstückhalterung 17 um die durch den Einzugsbolzen 7 bzw. 26 vorgegebene Achse in 90°-Schritten gegenüber der Spanneinrichtung 16 entweder nacheinander einer von einer (im Sinne des Einzugsbolzens 7 bzw. 26 radialen) Seite heranreichenden Bearbeitungsmaschine zugeführt werden oder durch diese Drehung jeweils von verschiedenen Seiten bearbeitet werden. Bei einer anderen Winkelunterteilung durch die Nuten 15 und/oder durch die Nuten 20 ergeben sich bezüglich der Drehpositionierung entsprechend andere Möglichkeiten.

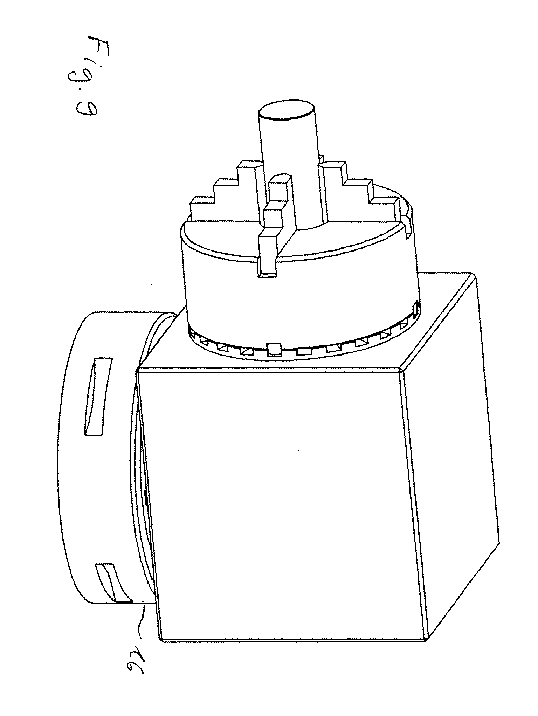

Fig. 8 zeigt eine weitere Variante zu den Fig. 6 und 7, die in Fig. 9 in gekoppeltem Zustand dargestellt ist. Die hier verwendete Werkstückhalterung 27 trägt einerseits einen Einzugsbolzen 28 an ihrer im Sinne der Fig. 8 und 9 Unterseite und darüber hinaus an einer in diesem Sinn seitlichen Seitenfläche eine weitere Aufnahmeöffnung 29, also eine weitere Spanneinrichtung. Die Spanneinrichtung ist mit Ausnahme der anderen äußeren Formgebung des Zylinders 1 (vergl. Fig. 3) und der im Folgenden noch näher erläuterten Nuten 30 identisch wie die in den Fig. 1 - 3 erläuterte Spanneinrichtung 16 aufgebaut. Die Einführrichtung der Aufnahmeöffnung 29 liegt unter einem Winkel von 90° zu der Achse des Einzugsbolzen 28. Damit bildet die Werkstückhalterung 27 zum einen einen Adapter für das mittelbare Verkoppeln eines Werkstücks oder einer Werkstückhalterung mit der Spanneinrichtung 16 und zum anderen ein Winkelstück für einen Winkel von 90°.

Zudem liegen die Nuten 30 unter Winkeln von 15°, es handelt sich also um den Vollkreis von 360° teilende vierundzwanzig Nuten 30.

Die Fig. 8 und 9 zeigen ferner ein Werkstück 31, an dem ein weiterer Einzugsbolzen 32 angebracht ist, der sowohl mit der Spanneinrichtung 16 als auch mit der Werkstückhalterung 27 verkoppelt werden kann. Die geometrische Gestalt des Werkstücks 31 ist für die Erfindung nicht von weiterem Belang und soll lediglich verdeutlichen, dass kompliziertere Werkstückformen eine beispielsweise spanabhebende Bearbeitung von verschiedensten Seiten erfordern können.

Ferner sind an dem Werkstück 31 in der bereits mehrfach erwähnten Weise Passsteine 33 in entsprechenden Nuten 34 angebracht, die unter 90° liegen. Im Prinzip würde eine einzige Nut 34 mit einem einzigen Passstein 33 ausreichen, jedoch bildet der Winkel 90° der vier Passsteine 33 und Nuten 34 ein Vielfaches der 15°-Teilung der Nuten 30 und passt außerdem zu der 90°-Teilung der Nuten 15, so dass sich hier keine weiteren Schwierigkeiten ergeben und die Aufnahmefähigkeit für Drehmomente verbessert ist. (Dies gilt im Prinzip auch für die Teilung und Zahl der Passsteine 19 in den Nuten 20 und der Passsteine 27 der Werkstückhalterung 25).

Man erkennt aus den Fig. 8 und 9, dass sich durch Hinzufügen und Weglassen der Werkstückhalterung 27 und Ausnutzen der Verdrehmöglichkeiten zwischen der Werkstückhalterung 27 und der Spanneinrichtung 16 sowie zwischen dem Werkstück 31 und der Werkstückhalterung 27 und schließlich zwischen dem Werkstück 31 und der Spanneinrichtung 16 direkt die unterschiedlichsten Positionierungsmöglichkeiten für das Werkstück 31 ergeben. Damit ist die grundsätzliche Flexibilität der Erfindung veranschaulicht, wobei natürlich auch ganz andere Winkelteilungen der Nuten und Passsteine und andere Winkel zwischen der Aufnahmeöffnung 29 und dem Einzugsbolzen 28 sowie entsprechend abweichende Zahlen von Spanneinrichtungen an einer Werkstückhalterung oder Einzugsbolzen an Werkstücken oder auch Werkstückhalterungen möglich sind. Solche Variationen ergeben sich kombinatorisch und müssen hier nicht im Einzelnen dargestellt werden.

## Patentansprüche

1. Spanneinrichtung zur Befestigung eines Einzugsbolzens (7) mit einer Aufnahmeöffnung zum Einführen des Einzugsbolzens (7) in die Spanneinrichtung und einer die Aufnahmeöffnung umgebenden Anlageoberfläche,
welche Spanneinrichtung dazu ausgelegt ist, einen mit dem Einzugsbolzen (7) versehenen Gegenstand durch Einführen des Einzugsbolzens in die Aufnahmeöffnung und Verklemmen des Einzugsbolzens in der Aufnahmeöffnung zu befestigen, wobei der Gegenstand an der Anlageoberfläche anliegt,
**dadurch gekennzeichnet, dass** die Anlageoberfläche zumindest eine von der Aufnahmeöffnung beabstandete offene Nut aufweist, welche Nut dazu ausgelegt ist, den an der Spanneinrichtung befestigten Gegenstand bezüglich einer Drehung gegenüber der Spanneinrichtung um eine durch den Einzugsbolzen verlaufende Achse zu verriegeln.

2. Spanneinrichtung nach Anspruch 1, die genau eine Aufnahmeöffnung zum Einführen eines Einzugsbolzens (7) aufweist.

3. Spanneinrichtung nach Anspruch 1 oder 2, bei der n Nuten in der Anlageoberfläche vorgesehen sind, die in Bezug auf die Aufnahmeöffnung zueinander unter Winkeln von 360°/n liegen, wobei n eine natürliche Zahl zwischen einschließlich 2 und 24 ist.

4. Spanneinrichtung nach einem der vorstehenden Ansprüche, bei der die Nut(en) zumindest zu einem wesentlichen Teil zu der Anlageoberfläche senkrecht verlaufende radiale Seitenwände aufweisen.

5. Spanneinrichtung nach einem der vorstehenden Ansprüche, mit einer weiteren Aufnahmeöffnung zum Einführen eines weiteren Einzugsbolzens (7) in die Spanneinrichtung, wobei die beiden Aufnahmeöffnungen für ein Einführen von Einzugsbolzen (7) aus unterschiedlichen Richtungen ausgelegt sind.

6. Spanneinrichtung nach einem der vorstehenden Ansprüche mit einem Einzugsbolzen (7) zum Einführen in eine Aufnahmeöffnung einer anderen Spanneinrichtung, wobei dieser Einzugsbolzen (7) und die Aufnahmeöffnung der Spanneinrichtung zu einem Einführen in verschiedenen Richtungen ausgelegt sind.

7. Spanneinrichtung nach Anspruch 5 oder 6 mit zwei Anlageoberflächen, die jeweils um die Aufnahmeöffnung(en) bzw. um den Einzugsbolzen vorgesehen sind und die senkrecht zueinander liegen.

8. Satz aus einer Spanneinrichtung nach einem der vorstehenden Ansprüche und einem Gegenstand, der den in der Aufnahmeöffnung der Spanneinrichtung zu befestigenden Einzugsbolzen aufweist und der an der Anlageoberfläche der Spanneinrichtung anliegend an der Spanneinrichtung befestigt werden kann,
**dadurch gekennzeichnet, dass** die Spanneinrichtung und der zu befestigende Gegenstand jeweils zumindest eine Nut aufweisen und in einer der Nuten ein Nutenstein befestigt ist, wobei die Nut der Spanneinrichtung und die Nut des Gegenstandes bei einer Befestigung des Gegenstandes an der Spanneinrichtung aufeinander zu liegen kommen können und durch den Nutenstein bezüglich der Drehung des Gegenstandes gegenüber der Spanneinrichtung um die durch den Einzugsbolzen verlaufende Achse gegeneinander verriegelt werden können.

9. Satz nach Anspruch 8, bei der der Nutenstein an dem Gegenstand angebracht ist.

10. Satz nach Anspruch 8 oder 9, bei der der Gegenstand eine Werkstückhalterung ist.

11. Satz nach einem der Ansprüche 8 bis 10, bei dem der Nutenstein in der zugehörigen Nut durch genau zwei einander gegenüberliegende und in Bezug zu dem Einzugsbolzen radial verlaufende Seitenkanten positioniert ist und die Nut in den zu diesen Seitenkanten senkrechten Seitenkanten gegenüber dem Nutenstein Übermaß hat.

12. Verfahren zum Herstellen einer Werkstückhalterung für einen Satz nach einem der Ansprüche 8 bis 11, bei dem die Nut in die Werkstückhalterung eingefräst wird, die Werkstückhalterung danach thermisch gehärtet wird und die Nut nach der thermischen Härtung durch eine Nachbearbeitung zweier Seitenkanten auf Maß und Position justiert wird.
